# EUROPÄISCHE PATENTSCHRIFT

(11) **EP 1 129 429 B1**
(45) Veröffentlichungstag und Bekanntmachung des Hinweises auf die Patenterteilung: **04.09.2002**
(21) Anmeldenummer: 99948878.6
(22) Anmeldetag: 27.09.1999
(51) Int. Cl.: G06K 19/04, G07C 9/00, A41D 19/00

(54) **VERWENDUNG EINES HANDSCHUHS MIT EINEM DATENTRÄGER ZUR BERÜHRUNGSLOSEN KONTROLLE IN SKIGEBIETEN**
USAGE OF A GLOVE WITH DATA STORAGE MEDIUM FOR PERFORMING CONTACTLESS CONTROL IN SKI RESORTS
UTILISATION D'UN GANT AVEC SUPPORT DE DONNEES SERVANT A REALISER UN CONTROLE SANS CONTACT DANS DES STATIONS DE SKI

(30) Priorität: 13.11.1998 DE 29820344 U
(43) Veröffentlichungstag der Anmeldung: 05.09.2001
(73) Patentinhaber: SkiData AG, 5083 Gartenau (AT)
(72) Erfinder: LIPPERT, Johannes, A-5360 St. Wolfgang (AT)
(74) Vertreter: Haft, von Puttkamer, Berngruber, Czybulka
(86) Internationale Anmeldenummer: EP9907169
(87) Internationale Veröffentlichungsnummer: WO00030028

(56) Entgegenhaltungen:
- WO-A-94/25939
- DE-A- 19 530 391
- DE-U- 29 809 479
- US-A- 5 003 637
- US-A- 5 715 555
- PATENT ABSTRACTS OF JAPAN vol. 1998, no. 08, 30. Juni 1998 (1998-06-30) & JP 10 082223 A (TOKAI RIKA CO LTD), 31. März 1998 (1998-03-31)
- DATABASE WPI Week 199823, Derwent Publications Ltd., London, GB; Class E05, AN 1998-255935 'Vehicle Theft Prevention Apparatus' & JP 10 082 223 A (TOKAI RIKA DENKI KK) 31 M{rz 1998

## Beschreibung

Die Erfindung bezieht sich auf die Verwendung eines Handschuhs mit einem berührungslosen Datenträger.

Gegenüber Datenträgern, die in ein Kontrollgerät gesteckt werden müssen, besitzen berührungslos arbeitende Datenträger, die über eine größere Datenübertragungsentfernung mit einer Lese- bzw. einer Schreib- und Leseeinrichtung im Rundfunkwellenbereich zusammenarbeiten, den Vorteil, daß sie z. B. in Form einer Karte, z. B. am Anorak getragen oder in eine Armbanduhr integriert sein können, also "handfree" einsetzbar sind. Sie werden daher bevorzugt an Zugangskontrollen von Skiliften und Seilbahnanlagen eingesetzt, die im allgemeinen eine Personenvereinzelungseinrichtung, wie ein Drehkreuz, aufweisen, die durch die Lese- oder Schreib- und Leseeinrichtung betätigt bzw. entsperrt wird, wenn die Schreib- und Leseeinrichtung vom Datenträger entsprechende Daten empfängt (vgl. WO 94/25939).

Damit er beim Skifahren nicht verloren gehen kann, wird der Datenträger im allgemeinen am Anorak befestigt oder in einer Tasche des Anoraks aufbewahrt. Man ist daher mehr oder weniger gezwungen, den Anorak oder das sonstige Oberbekleidungsstück zur Zugangskontrolle auch dann anzubehalten, wenn man es eigentlich ablegen möchte. Die in eine Armbanduhr integrierten Datenträger, wie beispielsweise aus der DE 29809479 U bekannt, sind hingegen relativ kostspielig.

Aus DE 195 30 391A ist eine Lese- und Schreibeinrichtung für Transponder bekannt, die zur Lagerhaltung z. B. von Gasflaschen eingesetzt werden. Um das Lesen und Beschreiben des Transponders zu vereinfachen ist in der Handflächenseite eines Handschuhs eine Antenne und ein Schalter vorgesehen, der mit der Lese- und Schreibeinrichtung über ein Kabel verbunden ist. Aus Patent Abstracts of Japan vol. 198, no. 08, 30. Juni 1998 und JP 10 082223 A geht eine Autodiebstahlsicherung hervor, bei der ein Transponder in einem Kleidungsstück des Fahrers, beispielsweise im Handschuh, verwendet wird. Wenn die Motordrehzahl einen bestimmten Wert überschreitet, sendet der Transponder einen Identifikationscode, der von einem Empfänger am Fahrzeug empfangen wird. Wenn der empfangene Code nicht mit dem gespeicherten Code übereinstimmt, wird die Benzinzufuhr unterbrochen.

Aufgabe der Erfindung ist es, einen berührungslosen Datenträger für Skifahrer bereitzustellen, der ohne Störgefühle hervorzurufen und ohne kaum zusätzliche Kosten verursachten, verwendet werden kann.

Dies wird erfindungsgemäß durch die Maßnahmen des Anspruchs 1 erreicht. Skihandschuhe schützen vor Kälte und vor Verletzungen der Hand. Sie gehören daher zu den Bekleidungsstücken, die ein Skifahrer praktisch immer mit sich führt.

Berührungslose Datenträger aus einer Trägerplatte mit einem Chip und einer Antenne sind im Handel als Massenprodukt zu geringen Kosten erhältlich. Da erfindungsgemäß im wesentlichen nur ein solcher Datenträger ohne wesentliche Änderungen verwendet und in einem herkömmlichen Skihandschuh am Handschuhrücken lediglich befestigt werden muß, werden für den Handschuh durch den Datenträger kaum zusätzliche Kosten verursacht. Die Trägerplatte ist vorzugsweise im Bereich des Handschuhrückens angeordnet, da es dort am wenigstens stört und dieser Bereich auch dann frei bleibt, wenn der Skifahrer seine Skistöcke beim Passieren des Kontrollgeräts hält.

Der Chip mit der Antenne ist vorzugsweise in eine kleine Kunststoffträgerplatte eingekapselt. Dadurch ist er vor Umwelteinflüssen, auch mechanischer Beanspruchung, bestens geschützt. Der Chip mit der Antenne kann dazu in das Plättchen eingegossen oder eingespritzt sein. Das Plättchen kann eine Dicke von beispielsweise 1 bis 3 mm und einen Durchmesser von z.B. 2 bis 4 cm aufweisen. Es ist vorzugsweise rund, insbesondere kreisförmig ausgebildet, jedenfalls weist es abgerundete Ecken auf, um eine Beschädigung des Handschuhs oder gar Verletzungen zu vermeiden. Die Antenne, die vorzugsweise als Spule ausgebildet ist, verläuft im Randbereich des Plättchens.

Sportbekleidung wird heutzutage oft durch den Einbau an sich bekleidungsfremder technischer Einrichtungen eine sichtbare Technizität verliehen, um sie äußerlich aufzuwerten. Die Kunststoffträgerplatte mit dem eingekapselten Chip und der Antenne sind hierzu hervorragend geeeignet. Zu diesem Zweck wird der Skihandschuh im Bereich des Handrückens an seiner Außenseite vorzugsweise mit einer fensterförmigen Aussparung versehen, in der die Trägerplatte mit dem Chip und der Antenne angeordnet wird. Um den eingekapselten Chip und die Antenne in der Ausnehmung sichtbar zu machen, ist die Trägerplatte transparent ausgebildet. Sie kann dazu beispielsweise aus Polyacryl, Polycarbonat, Polyethylentherephthalat, Polyethylen oder dgl. transparentem Kunststoff gebildet sein.

Die Aussparung ist im Oberflächenmaterial des Handschuhs vorgesehen, das beispielsweise ein Textilmaterial, Leder oder eine Folie sein kann. Zur Befestigung der Trägerplatte in der Aussparung in der Oberflächenschicht kann die Trägerplatte am Rand wenigstens einen Ansatz aufweisen, mit dem sie am Oberflächenmaterial und/oder an einer oder mehreren Schichten unter dem Oberflächenmaterial befestigt ist. Diese Schicht oder Schichten unter dem Oberflächenmaterial können aus Textilmaterial oder einer Folie bestehen. Dabei kann es sich auch um atmungsaktive, wasserundurchlässige Schichten handeln, beispielsweise mit Mikroporen versehene Folien z. b. aus Polytetrafluorethylen oder dgl. fluorhaltigen Kunststoffen.

Der Ansatz an der Trägerplatte wird durch das Oberflächenmaterial verdeckt. Er kann durch eine oder mehrere Laschen gebildet werden, oder durch einen Flansch. Der Ansatz kann durch entsprechende Öffnungen zum Annähen an dem Oberflächenmaterial und/oder der oder den unter dem Oberflächenmaterial liegenden Schicht bzw. Schichten ausgebildet sein. Die Trägerplatte kann aber beispielsweise auch durch Anschweißen oder Ankleben des Ansatzes an der Schicht des Handschuhs unter dem Oberflächenmaterial oder an der Unterseite des Oberflächenmaterials befestigt werden. Wenn die Trägerplatte an der Schicht unter dem Oberflächenmaterial angeschweißt oder angeklebt wird, kann der Ansatz auch ganz weggelassen werden.

Der Skihandschuh, der erfindungsgemäß mit dem berührungslosen Datenträger versehen wird, kann einen beliebigen Aufbau aufweisen. Vorzugsweise besitzt er jedoch unter der Trägerplatte eine Füllmaterialschicht, damit sich die Trägerplatte nicht auf die Hand durchdrückt. Der Skihandschuh kann ein Fingerhandschuh oder ein Fäustling sein.

Um den Handschuh im Bereich der Aussparung in dem Oberflächenmaterial abzudichten, liegt das Oberflächenmaterial vorzugsweise dicht am oder auf dem Randbereich der Trägerplatte an, ggf. kann es auch an die Trägerplatte angeklebt oder angeschweißt sein.

Nachstehend ist eine Ausführungsform des erfindungsgemäßen Datenträgers anhand der Zeichnung beispielhaft näher erläutert.
Darin zeigen:
- Fig. 1: eine Draufsicht auf einen Skihandschuh; und
- Fig. 2: einen Schnitt durch die Oberseite des Handschuhs entlang der Linie II-II in Figur 1 in vergrößerter Wiedergabe.

Danach ist an dem Rücken eines Skihandschuhs 1 eine Trägerplatte 2 befestigt, die aus einem transparentem Kunststoff besteht. Die Trägerplatte 2, die beispielsweise eine Dicke von 3 mm aufweisen kann, ist am Umfang mit einem laschenförmigen Ansatz 3 versehen, der mit einer Dicke von beispielsweise 0,2 bis 1 mm dünner ausgebildet ist als die Platte 2. In die Trägerplatte 2 ist der berührungslose Datenträger, also ein Chip 4, mit angebondeter Antennenspule 5 eingekapselt. Die Trägerplatte 2 ist ebenso wie die Antennenspule 5, die im Randbereich der Trägerplatte 2 verläuft, rund ausgebildet.

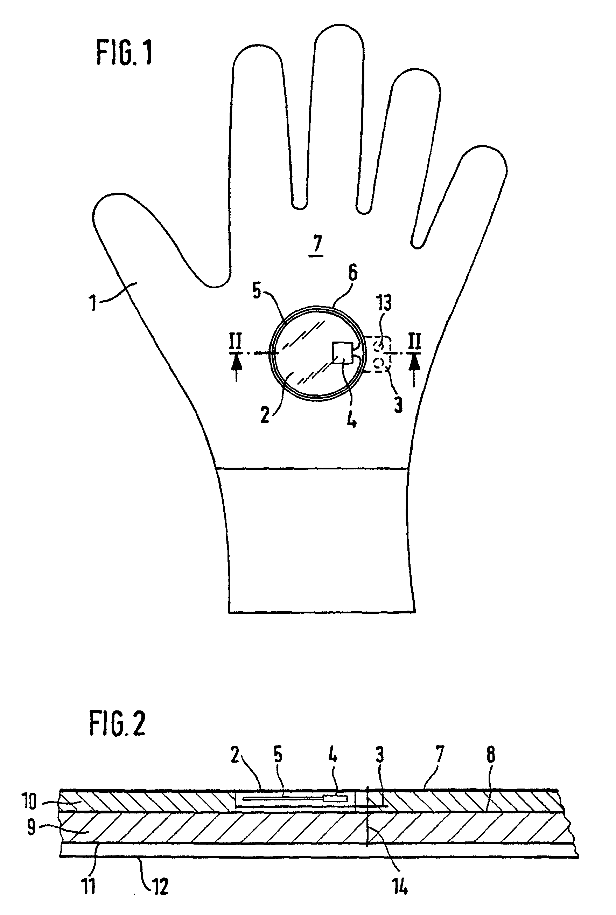

Die Trägerplatte 2 ist in einer Aussparung 6 in dem Oberflächenmaterial 7 des Handschuhs 1 angeordnet. Der Ansatz 3 ist dabei durch das Oberflächenmaterial 7 verdeckt und deshalb in Figur 1 gestrichelt dargestellt.

Gemäß Figur 2 weist der Handschuh 1 das Oberflächenmaterial 7, eine Trägerschicht 8 und eine weiche Polsterschicht 9 auf. Zudem kann eine Füllschicht 10 zwischen dem Oberflächenmaterial 7 und der Trägerschicht 8 vorgesehen sein, sowie unter der Polsterschicht 9 beispielsweise eine atmungsaktive, wasserdichte Zwischenschicht 11, z. B. aus einer Folie mit Mikroporen, und darunter eine Innenschicht 12, beispielsweise ein feines Gewebe.

Die Oberflächenschicht 7 kann beispielsweise aus Leder, einer Folie oder einem Textilmaterial, wie Filz oder einem Gewebe bestehen. Die Trägerschicht 8 kann ein Textilmaterial, beispielsweise Filz oder ein Gewebe, oder eine Folie sein. Der Ansatz 3, der mit entsprechenden Löchern 13 versehen ist, dient zum Annähen des Plättchens 2 an der Trägerschicht 8 und/oder der Oberflächenschicht 7 sowie ggf. auch noch an der Zwischenschicht 12, wie durch die Naht 14 in Figur 2 schematisch dargestellt. Die Oberflächenschicht 7 liegt mit dem Rand ihrer Aussparung 6 dicht an dem Plättchen 2 an.

## Patentansprüche

1. Verwendung eines Handschuhs mit einem einen Chip (4) und eine Antenne (5) aufweisenden berührungslosen Datenträger für Zugangskontrollanlagen von Skiliften und Seilbahnanlagen, die eine Leseeinrichtung besitzen, durch die eine Personenvereinzelungseinrichtung betätigt wird, wenn die Leseeinrichtung vom Datenträger entsprechende Daten empfängt, wobei zur Aufnahme von Chip (4) und Antenne (5) eine Trägerplatte (2) vorgesehen ist, die im Handschuh am Handschuhrücken befestigt ist.

2. Verwendung nach Anspruch 1, **dadurch gekennzeichnet, daß** der Chip (4) und die Antenne (5) in die Trägerplatte (2) eingekapselt sind.

3. Verwendung nach einem Anspruch 1 oder 2, **dadurch gekennzeichnet, daß** der Handschuh (1) am Handschuhrücken an seiner Außenseite eine Aussparung (6) aufweist, in der die Trägerplatte (2) angeordnet ist.

4. Verwendung nach Anspruch 3, **dadurch gekennzeichnet, daß** die Trägerplatte (2) aus einem transparenten Material besteht.

5. Verwendung nach Anspruch 3 und 4, **dadurch gekennzeichnet, daß** die Aussparung (6) im Oberflächenmaterial (7) des Handschuhs (1) vorgesehen ist und die Trägerplatte (2) am Rand wenigstens einen durch das Oberflächenmaterial (7) abgedeckten Ansatz (3) zu ihrer Befestigung an dem Oberflächenmaterial (7) und/oder wenigstens einer unter dem Oberflächenmaterial angeordneten Schicht (8, 11) aufweist.

## Claims

1. Use of a glove with a noncontacting data carrier having a chip (4) and an antenna (5) for access control systems of ski lifts and cable cars which have a reading device by which a person singling device is operated when the reading device receives corresponding data from the data carrier, wherein a carrier plate (2) is provided for receiving chip (4) and antenna (5), said plate being fastened in the glove to the back thereof.

2. Use according to claim 1, **characterized in that** the chip (4) and the antenna (5) are encapsulated in the carrier plate (2).

3. Use according to claim 1 or 2, **characterized in that** the glove (1) has on the back of the glove on the outside thereof a gap (6) in which the carrier plate (2) is disposed.

4. Use according to claim 3, **characterized in that** the carrier plate (2) is made of a transparent material.

5. Use according to claims 3 and 4, **characterized in that** the gap (6) is provided in the surface material (7) of the glove (1), and the carrier plate (2) has at the edge at least one extension (3) covered by the surface material (7) for fastening the plate to the surface material (7) and/or at least one layer (8, 11) disposed under the surface material.

## Revendications

1. Utilisation d'un gant avec un support de données sans contact présentant une puce (4) et une antenne (5) pour des installations de contrôle d'accès de téléskis et de téléphériques, qui possèdent un dispositif de lecture grâce auquel est actionné un système d'individualisation de personnes lorsque le dispositif de lecture reçoit du support de données des données correspondantes, et pour recevoir la puce (4) et l'antenne (5), il est prévu une plaque support (2) qui est fixée dans le gant sur le dos du gant.

2. Utilisation selon la revendication 1, **caractérisée en ce que** la puce (4) et l'antenne (5) sont enrobées dans la plaque support (2).

3. Utilisation selon la revendication 1 ou 2, **caractérisée en ce que** le gant (1) présente sur la face extérieure du dos de gant un évidement (6) dans lequel est agencée la plaque support (2).

4. Utilisation selon la revendication 3, **caractérisée en ce que** la plaque support (2) est constituée par un matériau transparent.

5. Utilisation selon les revendications 3 et 4, **caractérisée en ce que** l'évidement (6) est prévu dans le matériau de surface (7) du gant (1) et **en ce que** la plaque support (2) présente sur le bord au moins un prolongement (3) recouvert par le matériau de surface, destiné à sa fixation sur le matériau de surface (7) et/ou au moins une couche (8, 11) agencée en dessous du matériau de surface.
